(19) Europäisches Patentamt
European Patent Office
Office européen des brevets

(11) **EP 4 122 974 A1**

(12) **EUROPEAN PATENT APPLICATION**
published in accordance with Art. 153(4) EPC

(43) Date of publication:
**25.01.2023 Bulletin 2023/04**

(21) Application number: **21771423.7**

(22) Date of filing: **04.03.2021**

(51) International Patent Classification (IPC):
**C08G 81/02** (2006.01)   **C09D 133/00** (2006.01)
**C09D 167/08** (2006.01)   **C09D 7/63** (2018.01)

(52) Cooperative Patent Classification (CPC):
**C08G 81/02; C09D 7/63; C09D 133/00; C09D 167/08**

(86) International application number:
**PCT/JP2021/008350**

(87) International publication number:
**WO 2021/187126 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2020 JP 2020049227**

(71) Applicant: **DIC Corporation**
**Tokyo 174-8520 (JP)**

(72) Inventors:
• **OKADA Tomohiro**
**Takaishi-shi, Osaka 592-0001 (JP)**
• **KUROSHIMA Akitaka**
**Takaishi-shi, Osaka 592-0001 (JP)**
• **MUKAI Takashi**
**Takaishi-shi, Osaka 592-0001 (JP)**
• **KOSAKA Norio**
**Takaishi-shi, Osaka 592-0001 (JP)**

(74) Representative: **TBK**
**Bavariaring 4-6**
**80336 München (DE)**

(54) **AQUEOUS RESIN COMPOSITION, AQUEOUS COATING MATERIAL, AND COATED ARTICLE**

(57)    Provided is an aqueous resin composition containing an alkyd resin (A) having vinyl polymer segments, a basic compound (B), and an aqueous medium (C). The alkyd resin (A) contains 20 to 45% by mass of an alicyclic polybasic acid-derived structure. The aqueous resin composition can produce a coating film with high hardness and excellent impact resistance and therefore can be suitably used for aqueous paints for metal products such as automobiles, railroad vehicles, machinery, furniture, cans, and building materials; plastic products such as automobile parts and home appliances; wood products such as furniture and building materials; and inorganic material products such as building materials and glass.

EP 4 122 974 A1

**Description**

Technical Field

The present invention relates to an aqueous resin composition, an aqueous paint, and a coated article.

Background Art

Paints containing vinyl-modified alkyd resins can produce coating films with excellent paint stability and leveling properties and therefore are used in various industrial fields, such as automobiles.

In such a circumstance, a production method for an aqueous alkyd resin with excellent storage stability has been proposed, in which a condensation product of a specific vinylated fatty acid and a polyol compound is neutralized with a basic compound (for example, see PTL 1). However, the aqueous alkyd resin obtained from this production method has a problem in that it fails to produce a coating film with both high hardness and impact resistance which are required in the fields under physically severe environments, such as construction machinery, building exteriors, and automobiles.

Citation List

Patent Literature

PTL 1: Japanese Patent No. 3564825

Summary of Invention

Technical Problem

An object of the present invention is to provide an aqueous resin composition that can produce a coating film with high hardness and excellent impact resistance. Solution to Problem

The inventors of the present invention have conducted studies to solve the above problem and found that an aqueous resin composition containing a specific alkyd resin, a basic compound, and an aqueous medium can solve the above problem.

Specifically, the present invention relates to an aqueous resin composition containing an alkyd resin (A) having acrylic polymer segments, a basic compound (B), and an aqueous medium (C), in which the alkyd resin (A) contains 20 to 45% by mass of an alicyclic polybasic acid-derived structure.

Advantageous Effects of Invention

The aqueous resin composition of the present invention can produce a coating film with high hardness and excellent impact resistance and therefore can be suitably used for aqueous paints for metal products such as automobiles, railroad vehicles, machinery, furniture, cans, and building materials; plastic products such as automobile parts and home appliances; wood products such as furniture and building materials; and inorganic material products such as building materials and glass.

Description of Embodiments

An aqueous resin composition of the present invention is an aqueous resin composition containing an alkyd resin (A) having acrylic polymer segments, a basic compound (B), and an aqueous medium (C), in which the alkyd resin (A) contains 20 to 45% by mass of an alicyclic polybasic acid-derived structure.

First, the alkyd resin (A) having acrylic polymer segments will be described.

The alkyd resin (A) is produced, for example, by an esterification reaction of an acrylic polymer (a1) having a carboxy group and an alkyd resin (a2) having a hydroxy group.

The polymer (a1) is produced, for example, by copolymerization of an unsaturated monomer having a carboxy group and another unsaturated monomer.

Examples of the unsaturated monomer having a carboxy group include (meth)acrylic acid, crotonic acid, fumaric acid, maleic acid (anhydride), citraconic acid (anhydride), and itaconic acid (anhydride), but (meth)acrylic acid is preferred from the viewpoints of copolymerizability with other monomers and coating film properties. These monomers can be used alone or in combination of two or more.

Examples of another unsaturated monomer include alkyl (meth)acrylates such as methyl (meth)acrylate, ethyl (meth)acrylate, n-propyl (meth)acrylate, iso-propyl (meth)acrylate, n-butyl (meth)acrylate, isobutyl (meth)acrylate, 2-ethylhexyl (meth)acrylate, and lauryl (meth)acrylate; aralkyl (meth)acrylates such as benzyl (meth)acrylate and phenethyl (meth)acrylate; cycloalkyl (meth)acrylates such as cyclohexyl (meth)acrylate and isobornyl (meth)acrylate; alkoxyalkyl (meth)acrylates such as methoxyethyl (meth)acrylate and methoxybutyl (meth)acrylate; hydroxyalkyl (meth)acrylates such as 2-hydroxyethyl (meth)acrylate, 2-hydroxypropyl (meth)acrylate, 3-hydroxybutyl (meth)acrylate, 2-hydroxybutyl (meth)acrylate, 4-hydroxybutyl (meth)acrylate, and 3-chloro-2-hydroxypropyl (meth)acrylate; vinyl ethers having hydroxy groups, such as 2-hydroxyethyl vinyl ether and 4-hydroxybutyl vinyl ether; allyl ethers having hydroxy groups, such as 2-hydroxyethyl allyl ether; mono(meth)acrylates of polyoxyalkylene glycol; vinyl monomers having (poly)lactone chains and hydroxy groups; vinyl monomers having various blocked hydroxy groups, such as 2-trimethylsiloxyethyl (meth)acrylate, 2-trimethylsiloxyethyl vinyl ether, 2-(1-ethoxy)ethoxyethyl (meth)acrylate, 2-[2-(meth)acryloyloxy]ethoxytetrahydrofuran, 3-[2-(meth)acryloyloxy]ethyl oxazolidine, and 2,2-dimethyl-3-[2-(meth)acryloyloxy]ethyl oxazolidine; monomers having cyano groups, such as methacrylonitrile and crotononitrile; vinyl monomers having amino groups, such as 2-dimethylaminoethyl (meth)acrylate, N-[2-(meth)acryloyloxy]ethylmorpholine, vinylpyridine, N-vinylcarbazole, N-(2-dimethylamino)ethyl (meth)acrylamide, N-(2-diethylamino)ethyl (meth)acrylamide, N-(2-dimethylamino)ethyl crotonic acid amide, N-(2-diethylamino)ethyl crotonic acid amide, 2-dimethylaminoethyl vinyl ether, and 2-diethylaminoethyl vinyl ether; vinyl monomers having amide groups, such as methyl (meth)acrylamide glycolate methyl ether methyl (meth)acrylamide glycolate, N-isopropyl (meth)acrylamide, N-methyl (meth)acrylamide, N-vinylformamide, N,N-dimethyl (meth)acrylamide, N-(meth)acryloylmorpholine, N-(meth)acryloylpyrrolidine, N-vinylpyrrolidone, ethyl (acrylamide) glycolate, ethyl (acrylamide) glycolate methyl ether, N-methylol (meth)acrylamide, N-methoxymethyl (meth)acrylamide, N-ethoxymethyl (meth)acrylamide, N-propoxymethyl (meth)acrylamide, N-n-butoxymethyl (meth)acrylamide, N-i-butoxymethyl (meth)acrylamide, N-phenoxymethyl (meth)acrylamide, N-n-hexyloxymethyl (meth)acrylamide, N-methoxyethyl (meth)acrylamide, N-methoxypropyl (meth)acrylamide, N-n-butoxyethyl (meth)acrylamide, and N-i-butoxyethyl (meth)acrylamide; vinyl monomers having epoxy groups, such as glycidyl (meth)acrylate, methyl glycidyl (meth)acrylate, 3,4-epoxycyclohexylmethyl (meth)acrylate, vinyl cyclohexene oxide, glycidyl vinyl ether, methyl glycidyl vinyl ether, and allyl glycidyl ether; vinyl monomers having 5-membered cyclocarbonate groups, such as 2,3-carbonate propyl (meth)acrylate, 2-methyl-2,3-carbonate propyl (meth)acrylate, and 3,4-carbonate butyl (meth)acrylate; vinyl monomers containing 6-membered cyclocarbonate groups, such as 5-[N-(meth)acryloylcarbamoyloxymethyl]-5-ethyl-1,3-dioxan-2-one and 5-[N-{2-(meth)acryloyloxy}ethylcarbamoyloxymethyl]-5-ethyl-1,3-dioxan-2-one; vinyl monomers having carbamate groups, such as methyl N-(meth)acryloylcarbamate and ethyl N-[2-(meth)acryloyloxy]ethylcarbamate; unsaturated bond-containing monomers having perfluoroalkyl groups, such as perfluorocyclohexyl(meth)acrylate, di-perfluorocyclohexylfumarate, or N-iso-propyl perfluorooctanesulfonamide ethyl(meth)acrylate; fluoroolefins such as vinyl fluoride, vinylidene fluoride, tetrafluoroethylene, chlorotrifluoroethylene, and hexafluoropropylene; chlorinated olefins such as vinyl chloride and vinylidene chloride; $\alpha$-olefins such as ethylene, propylene, isobutylene, 1-butene, and 1-hexene; aromatic vinyl monomers such as styrene, $\alpha$-methylstyrene, p-tert-butylstyrene, O-methylstyrene, and p-methylstyrene; monomers having sulfonic acid amide groups, such as p-styrenesulfonamide and N-methyl-p-styrenesulfonamide; phosphoric ester bond-containing monomers; monomers having sulfonic acid groups or organic amine salts thereof, such as styrenesulfonic acid, vinylsulfonic acid, and 2-acrylamido-2-methyl-propanesulfonic acid; vinyl monomers having hydrolyzed silyl groups, such as vinyltrimethoxysilane, allyltrimethoxysilane, trimethoxysilylethyl vinyl ether, 3-(meth)acryloyloxypropyltrimethoxysilane, 3-(meth)acryloyloxypropyltriethoxysilane, 3-(meth)acryloyloxypropylmethyldimethoxysilane, and 3-(meth)acryloyloxypropylmethyldichlorosilane; alkyl vinyl ethers such as ethyl vinyl ether, n-butyl vinyl ether, isobutyl vinyl ether, and n-hexyl vinyl ether; and cycloalkyl vinyl ethers such as cyclopentyl vinyl ether, cyclohexyl vinyl ether, and methyl cyclohexyl vinyl ether.

The acid value of the polymer (a1) is preferably 15 to 30 in terms of further improving the water resistance of a coating film.

The weight average molecular weight of the polymer (a1) is preferably 10,000 to 30,000 in terms of further improving the coating film strength.

The alkyd resin (a2) is produced by an esterification reaction of a fatty acid, a polybasic acid containing an alicyclic polybasic acid, and a polyhydric alcohol.

Known fatty acids can be used as the fatty acid. Examples thereof include soybean oil fatty acid, linseed oil fatty acid, safflower oil fatty acid, tall oil fatty acid, dehydrated castor oil fatty acid, coconut oil fatty acid, and tung oil fatty acid, and soybean oil fatty acid and dehydrated castor oil fatty acid are preferred. These fatty acids can be used alone or in combination of two or more.

The polybasic acid contains an alicyclic polybasic acid as an essential component, and the polybasic acid contains preferably 30% by mass or more, and more preferably 50% by mass or more, of the alicyclic polybasic acid, in terms of further improving the hardness and the impact resistance of a coating film.

Examples of the alicyclic polybasic acid include 1,1-cyclohexanedicarboxylic acid, hexahydrophthalic acid (anhydride), 1,3-cyclohexanedicarboxylic acid, 1,4-cyclohexanedicarboxylic acid, tetrahydrophthalic acid (anhydride), methylhexahydrophthalic acid (anhydride), HET acid (anhydride), and hydrogenated trimellitic acid (anhydride). Hexahydrophthalic acid (anhydride) is preferred in terms of further improving the hardness and the impact resistance of a coating film. These alicyclic polybasic acids can be used alone or in combination of two or more.

Examples of the polybasic acid other than the alicyclic polybasic acid include dibasic acids such as phthalic anhydride, isophthalic acid, terephthalic acid, succinic acid, fumaric acid, adipic acid, sebacic acid, and maleic anhydride, and lower alkyl esters of these acids; tri- or more-valent polybasic acids, such as trimellitic anhydride, methylcyclohexene tricarboxylic acid, and pyromellitic anhydride; sulfophthalic acid, sulfoisophthalic acid, and ammonium salts thereof, sodium salts, and lower alkyl esters. These polybasic acids can be used alone or in combination of two or more. Monocarboxylic acids such as benzoic acid, crotonic acid, and 4-tert-butylbenzoic acid can be used together as an acid component to adjust the molecular weight, for example. Among these, phthalic anhydride, isophthalic acid, and adipic acid are preferred in terms of easily adjusting the hardness of a coating film.

Examples of the polyhydric alcohol include divalent alcohols such as ethylene glycol, diethylene glycol, propylene glycol, 1,4-butanediol, neopentyl glycol, 3-methylpentanediol, 1,4-hexanediol, and 1,6-hexanediol; tri- or more-valent polyhydric alcohols, such as glycerin, trimethylolethane, trimethylolpropane, pentaerythritol, and tris(2-hydroxyethyl)isocyanurate; and polyhydric alcohols having polyoxyethylene groups. These polyhydric alcohols can be used alone or in combination of two or more. Among these, 1,4-butanediol and 1,6-hexanediol are preferred from the viewpoint of imparting flexibility to a coating film.

The hydroxy value of the alkyd resin (a2) is preferably 100 to 200 mg KOH/g or less in terms of further improving the balance between hardness and impact resistance of a coating film.

The weight average molecular weight of the alkyd resin (a2) is preferably 5,000 to 20,000 in terms of excellent coating film properties.

In the present invention, the hydroxy value is a value obtained by calculation from the raw material composition.

In the present invention, the average molecular weight is a value in terms of polystyrene based on gel permeation chromatography (hereinafter abbreviated as "GPC") measurement.

The alkyd resin (A) contains 20 to 45% by mass of the alicyclic polybasic acid-derived structure, but preferably 35 to 45% by mass in terms of further improving the hardness and the impact resistance of the coating film.

The alkyd resin (A) contains preferably 15 to 50% by mass, and more preferably 15 to 30% by mass, of the acrylic polymer segments in terms of further improving the balance between the storage stability of the resin and the coating film properties.

The triglyceride equivalent oil length of the alkyd resin (A) is preferably in the range of 5 to 15% in terms of further improving pigment dispersibility.

The acid value of the alkyd resin (A) is preferably 20 to 50 mg KOH/g in terms of further improving the storage stability.

In the present invention, the acid value is measured in accordance with the JIS test method K0070-1992.

The weight average molecular weight of the alkyd resin (A) is preferably in the range of 10,000 to 50,000.

Examples of the basic compound (B) include organic amines such as methylamine, dimethylamine, trimethylamine, ethylamine, diethylamine, triethylamine, butylamine, dibutylamine, tributylamine, monoalkanolamines such as N,N-dimethylethanolamine and 2-aminoethanol, diethanolamine, diisopropanolamine, and dibutanolamine; inorganic basic compounds such as ammonia, sodium hydroxide, and potassium hydroxide; quaternary ammonium hydroxides such as tetramethylammonium hydroxide, tetra-n-butylammonium hydroxide, and trimethylbenzylammonium hydroxide. Among these, organic amines and ammonia (or ammonia water) are preferred, and triethylamine and N,N-dimethylethanolamine are more preferred. These basic compounds (B) can be used alone or in combination of two or more.

The basic compound (B) is preferably used in such an amount that the neutralization rate of the carboxy groups of the alkyd resin (A) is in the range of 50 to 120%, and more preferably in the range of 60 to 80%, in terms of further improving the storage stability of the aqueous resin composition.

Examples of the aqueous medium (C) include water, water-miscible organic solvents, and mixtures thereof. Examples of the water-miscible organic solvents include alcohol solvents such as methanol, ethanol, propanol, n-butanol, iso-butanol, tert-butanol, and 3-methoxy butanol; ether solvents such as diisopropyl ether; glycol solvents such as ethylene glycol and propylene glycol; glycol ether solvents such as ethylene glycol monomethyl ether, ethylene glycol monoethyl ether, ethylene glycol monobutyl ether, ethylene glycol dimethyl ether, diethylene glycol dimethyl ether, diethylene glycol diethyl ether, diethylene glycol dibutyl ether, propylene glycol monomethyl ether, propylene glycol propyl ether, propylene glycol butyl ether, propylene glycol dimethyl ether, dipropylene glycol monomethyl ether, and dipropylene glycol dimethyl ether, and glycol ester solvents such as ethylene glycol monoethyl ether acetate, propylene glycol monomethyl ether acetate, diethylene glycol monoethyl ether acetate, and diethylene glycol monobutyl ether acetate; and ketone solvents such as acetone and methyl ethyl ketone. Among these, glycol ether solvents are preferred in terms of further improving the storage stability of the aqueous resin composition. These organic solvents can be used alone or in combination of two or more. In the present invention, water alone may be used, a mixture of water and a water-miscible organic solvent may be used, or only a water-miscible organic solvent may be used. From the viewpoints of safety and environmental impact, water alone or a mixture of water and a water-miscible organic solvent is preferred.

The aqueous resin composition of the present invention contains the alkyd resin (A), the basic compound (B), and the aqueous medium (C), and it is preferable that the alkyd resin (A) obtained by the method described above is dissolved or dispersed in the aqueous medium (C).

The alkyd resin (A) is dissolved or dispersed in the aqueous medium (C) preferably by a method in which the alkyd resin (A) is diluted with a water-miscible organic solvent, and thereafter the acid value of the alkyd resin (A) is neutralized by the basic compound (B) and the mixture is blended with water.

An aqueous paint of the present invention contains the aqueous resin composition of the present invention described above and may be in the form of a one-component paint without a curing agent or in the form of a multi-component paint with a curing agent.

The curing agent is not limited as long as it is capable of cross-linking reaction with the alkyd resin (A). For example, it is preferable to use amino resins, epoxy resins, polyisocyanates, block-type polyisocyanates, and the like.

Examples of the amino resins include methylolated amino resins obtained by reaction of one or more kinds of melamine, urea, benzoguanamine, and the like with formaldehyde, and methylolated amino resins having imino groups. It is preferable that all or some of methylol groups thereof are etherified with a monovalent alcohol with 1 to 8 carbon atoms, and examples thereof include butoxymethylated melamine resin, methoxymethylated melamine resin, and methoxy-butoxy mixed methylated melamine resin.

The aqueous paint of the present invention can contain, if necessary, various additives such as inorganic pigments, organic pigments, extender pigments, waxes, surfactants, stabilizers, fluidity regulators, dyes, leveling agents, rheology control agents, UV absorbers, antioxidants, plasticizers, antistatic agents, defoaming agents, viscosity regulators, light stabilizers, weather stabilizers, heat stabilizers, pigment dispersants, thermosetting resins, and thermoplastic resins.

The method of applying a paint composition of the present invention varies with articles to be coated, and examples of the method include a gravure coater, a roll coater, a comma coater, a knife coater, an air knife coater, a curtain coater, a kiss coater, a shower coater, a wheeler coater, a spin coater, dipping, screen printing, spraying, an applicator, and a bar coater.

The aqueous paint of the present invention can impart a cured coating film with high hardness and excellent impact resistance to the surfaces of various articles.

The aqueous paint may be applied directly to an article to be coated, or a primer coating material compatible with an article to be coated may be applied before the aqueous paint of the present invention is applied. After the aqueous paint of the present invention is applied, a topcoat may be additionally applied. A paint with excellent weather resistance containing an acrylic urethane resin, a silicone acrylic resin, a fluorine resin, or the like is preferred as the topcoat.

Examples of materials of the articles to be coated include various metals and alloys thereof, such as steel plate, iron, copper, zinc, aluminum, and magnesium; plastic substrates such as polycarbonates (PC), acrylonitrile-butadiene-styrene copolymers (ABS), polymer alloys of PC-ABS, polymethylmethacrylates (PMMA), polyethylene terephthalates (PET), polyamides (PA), polypropylene (PP), and fiber-reinforced plastics (FRP) with fillers such as glass fibers and carbon fibers; and glass.

Examples of the articles having a coating film of the aqueous paint of the present invention include housings and interior parts of home appliances such as televisions, refrigerators, washing machines, and air conditioners; housings and interior parts of electronic devices such as smartphones, mobile phones, tablet terminals, personal computers, digital cameras, and game machines; housings of office automation equipment such as printers and facsimiles; leisure and sporting goods; interior and exterior materials for various vehicles such as automobiles and railroad cars; industrial machinery; interior and exterior materials for buildings such as exterior walls, roofs, glass, and decorative panels; and civil engineering materials such as sound barrier walls and drainage channels.

EXAMPLES

The present invention will be described more specifically below with examples and comparative examples. The acid value was measured in accordance with the JIS test method K0070-1992, and the average molecular weight was measured under the following conditions of GPC measurement.

[Conditions of GPC Measurement]

Measuring system: High-speed GPC system ("HLC-8220GPC" manufactured by Tosoh Corporation)
Column: The following columns manufactured by Tosoh Corporation were connected in series.

"TSKgel G5000" (7.8 mm I.D. × 30 cm) × 1

"TSKgel G4000" (7.8 mm I.D. × 30 cm) × 1

"TSKgel G3000" (7.8 mm I.D. × 30 cm) × 1

"TSKgel G2000" (7.8 mm I.D. × 30 cm) × 1

Detector: RI (differential refractometer)
Column temperature: 40°C
Eluent: Tetrahydrofuran (THF)
Flow rate: 1.0 mL/min
Injection volume: 100 μL (tetrahydrofuran solution having a sample concentration of 4 mg/mL)
Standard sample: A calibration curve was prepared using the following monodisperse polystyrene.

(Monodisperse Polystyrene)

"TSKgel Standard polystyrene A-500" manufactured by Tosoh Corporation
"TSKgel Standard polystyrene A-1000" manufactured by Tosoh Corporation
"TSKgel Standard polystyrene A-2500" manufactured by Tosoh Corporation
"TSKgel Standard polystyrene A-5000" manufactured by Tosoh Corporation
"TSKgel Standard polystyrene F-1" manufactured by Tosoh Corporation
"TSKgel Standard polystyrene F-2" manufactured by Tosoh Corporation
"TSKgel Standard polystyrene F-4" manufactured by Tosoh Corporation
"TSKgel Standard polystyrene F-10" manufactured by Tosoh Corporation
"TSKgel Standard polystyrene F-20" manufactured by Tosoh Corporation
"TSKgel Standard polystyrene F-40" manufactured by Tosoh Corporation
"TSKgel Standard polystyrene F-80" manufactured by Tosoh Corporation
"TSKgel Standard polystyrene F-128" manufactured by Tosoh Corporation
"TSKgel Standard polystyrene F-288" manufactured by Tosoh Corporation
"TSKgel Standard polystyrene F-550" manufactured by Tosoh Corporation

(Synthesis Example 1: Synthesis of Vinyl Polymer (a1-1))

In a reaction vessel equipped with a stirrer, a thermometer, an inert gas inlet tube, a dropping funnel, and a reflux tube, 260 parts by mass of xylene and 260 parts by mass of dehydrated castor oil were charged and heated to 130°C. Subsequently, a mixture of 34 parts by mass of styrene, 22 parts by mass of n-butyl methacrylate, 22 parts by mass of 2-ethylhexyl methacrylate, 22 parts by mass of methacrylic acid, 1 part by mass of tert-butylperoxy-2-ethyl hexanoate, and 1 part by mass of tertiary amyl peroxy-2-ethylhexanoate was added dropwise over three hours. After the mixture was held for another three hours, the temperature was lowered to produce a vinyl polymer (a1-1) with an acid value of 160 mg KOH/g.

(Synthesis Example 2: Synthesis of Alkyd Resin (a2-1))

In a reaction vessel equipped with a stirrer, a thermometer, an inert gas inlet tube, and a glass multistage rectifying tube, 5 parts by mass of coconut oil fatty acid, 30 parts by mass of trimethylolpropane, 15 parts by mass of 1,6-hexanediol, and 50 parts by mass of hexahydrophthalic anhydride were charged and heated while introducing nitrogen gas. The temperature was increased to 240°C over four hours from the point when it reached 180°C, and the reaction was continued until the acid value reached 6 mg KOH/g to produce an alkyd resin (a2-1).

(Synthesis Example 3: Synthesis of Alkyd Resin (a2-2))

In a reaction vessel equipped with a stirrer, a thermometer, an inert gas inlet tube, and a glass multistage rectifying tube, 5 parts by mass of coconut oil fatty acid, 25 parts by mass of trimethylolpropane, 19 parts by mass of 1,6-hexanediol, 32 parts by mass of hexahydrophthalic anhydride, and 19 parts by mass of isophthalic acid were charged and heated while introducing nitrogen gas. The temperature was increased to 240°C over four hours from the point when it reached 180°C, and the reaction was continued until the acid value reached 6 mg KOH/g to produce an alkyd resin (a2-2).

(Synthesis Example 4: Synthesis of Alkyd Resin (Ra2-1))

In a reaction vessel equipped with a stirrer, a thermometer, an inert gas inlet tube, and a glass multistage rectifying tube, 5 parts by mass of coconut oil fatty acid, 20 parts by mass of trimethylolpropane, 25 parts by mass of 1,6-hexanediol, 36 parts by mass of isophthalic acid, and 14 parts by mass of adipic acid were charged and heated while introducing nitrogen gas. The temperature was increased to 240°C over four hours from the point when it reached 180°C, and the reaction was continued until the acid value reached 6 mg KOH/g to produce an alkyd resin (Ra2-1).

(Synthesis Example 5: Synthesis of Alkyd Resin (Ra2-2))

In a reaction vessel equipped with a stirrer, a thermometer, an inert gas inlet tube, and a glass multistage rectifying tube, 5 parts by mass of coconut oil fatty acid, 20 parts by mass of trimethylolpropane, 25 parts by mass of 1,6-hexanediol, and 50 parts by mass of isophthalic acid were charged and heated while introducing nitrogen gas. The temperature was increased to 240°C over four hours from the point when it reached 180°C, and the reaction was continued until the acid value reached 6 mg KOH/g to produce an alkyd resin (Ra2-2).

(Example 1: Synthesis and Evaluation of Aqueous Resin Composition (1))

In a reaction vessel equipped with a stirrer, a thermometer, an inert gas inlet tube, and a catcher vessel for collecting volatile solvents, 350 parts by mass of the vinyl polymer (a1-1) obtained in Synthesis Example 1 and 160 parts by mass of the alkyd resin (a2-1) obtained in Synthesis Example 2 were charged and heated to 200°C. Subsequently, after the volatile content was removed under reduced pressure, an esterification reaction was performed at the same temperature until the acid value reached 28 to produce an alkyd resin (A-1) having vinyl polymer segments. To this, 24 parts by mass of propylene glycol monopropyl ether were added, and thereafter 14 parts by mass of dimethylethanolamine were added and mixed well at 60°C. Subsequently, with 60°C being kept, 570 parts by mass of ion-exchanged water were added intermittently to produce a translucent aqueous resin composition (1) with a nonvolatile content of 42% by mass and a pH of 8.9. The alkyd resin (1) having vinyl polymer segments had a number average molecular weight of 2,000 and a weight average molecular weight of 30,000, and contained 43% by mass of an alicyclic polybasic acid-derived structure.

[Preparation of Aqueous Paint (1)]

An aqueous paint (1) was produced by mixing 80 parts by mass of the aqueous resin composition obtained in Example 1 and 20 parts by mass of a curing agent ("CYMEL 327", methylated melamine resin manufactured by Allnex GMBH).

[Preparation of Coating Film (1) for Evaluation]

The aqueous paint obtained as described above was applied by spraying on a hot dip galvanized steel sheet so that the dry film thickness was 20 um. Then, after preheating at 80°C for 10 minutes, a topcoat paint (a paint mixture of "BURNOCK WD-551" manufactured by DIC Corporation and "BURNOCK DNW-5500" manufactured by DIC Corporation" at a ratio of 80/20 (mass ratio)) was applied by spraying on the coating film so that the dry film thickness was 20 um. Subsequently, after preheating at 80°C for 10 minutes, a baking process was performed at 150°C for 30 minutes to produce a coating film (1) for evaluation.

[Evaluation of Coating Film Hardness]

The pencil hardness of the coating film (1) for evaluation obtained as described above was measured in accordance with JIS K 5600-5-4: 1999.

[Evaluation of Impact Resistance]

The impact resistance of the coating film (1) for evaluation obtained as described above was evaluated in accordance with the following criteria.

    A: No cracks or chips.
    B: Slightly cracked.
    C: Cracked more than moderately.

(Example 2: Synthesis and Evaluation of Aqueous Resin Composition (2))

A translucent aqueous resin composition (2) with a nonvolatile content of 42% by mass and a pH of 8.9 was produced in the same manner as in Example 1, except that the alkyd resin (a2-1) used in Example 1 was changed to the alkyd resin (a2-2). The alkyd resin (2) having vinyl polymer segments had an acid value of 28, a number average molecular weight of 2,000, and a weight average molecular weight of 30,000, and contained 27% by mass of an alicyclic polybasic acid-derived structure.

(Comparative Example 1: Synthesis and Evaluation of Aqueous Resin Composition (R1))

A translucent aqueous resin composition (R1) with a nonvolatile content of 42% by mass and a pH of 8.9 was produced in the same manner as in Example 1, except that the alkyd resin (a2-1) used in Example 1 was changed to the alkyd resin (Ra2-1). The alkyd resin having vinyl polymer segments had no alicyclic polybasic acid-derived structure.

(Comparative Example 2: Synthesis and Evaluation of Aqueous Resin Composition (R2))

A translucent aqueous resin composition (R2) with a nonvolatile content of 42% by mass and a pH of 8.9 was produced in the same manner as in Example 1, except that the alkyd resin (a2-1) used in Example 1 was changed to the alkyd resin (Ra2-2). The alkyd resin having vinyl polymer segments had no alicyclic polybasic acid-derived structure.

(Preparation and Evaluation of Aqueous Paints (2), (R1) and (R2))

Aqueous paints (2), (R1), and (R2) were prepared in the same manner as in Example 1, except that the aqueous resin composition (1) was changed to the aqueous resin compositions (2), (R1), and (R2), and the coating film hardness and the impact resistance were evaluated.

The compositions of Examples 1 and 2 and Comparative Examples 1 and 2 described above, and the evaluation results are listed in Table 1.

[Table 1]

| Table 1 | | | Example 1 | Example 2 | Comparative Example 1 | Comparative Example 2 |
|---|---|---|---|---|---|---|
| Alkyd resin having acrylic polymer segments | | | (A-1) | (A-2) | (RA-1) | (RA-2) |
| Composition (parts by mass) | Alkyd segments | Coconut oil fatty acid | 5 | 5 | 5 | 5 |
| | | Trimethylolpropane | 24 | 22 | 20 | 17 |
| | | 1,6-Hexanediol | 14 | 16 | 21 | 21 |
| | | Hexahydrophthalic anhydride | 43 | 27 | | |
| | | Isophthalic acid | | 16 | 31 | 43 |
| | | Adipic acid | | | 9 | |
| | Acrylic polymer segments | Styrene | 5 | 5 | 5 | 5 |
| | | N-butyl methacrylate | 3 | 3 | 3 | 3 |
| | | 2-Ethylhexyl methacrylate | 3 | 3 | 3 | 3 |
| | | Methacrylic acid | 3 | 3 | 3 | 3 |
| | | Total | 100 | 100 | 100 | 100 |
| Alicyclic polybasic acid-derived structure (% by mass) | | | 43 | 27 | 0 | 0 |
| Evaluation | Pencil hardness | | 3H | 3H | F | 3H |
| | Impact resistance | | A | A | A | c |

It was confirmed that the coating films obtained from the aqueous resin compositions of the present invention in Examples 1 and 2 had both high hardness and excellent impact resistance.

On the other hand, in Comparative Examples 1 and 2, which were examples in which the alkyd resins having no alicyclic polybasic acid-derived structures were used, it was confirmed that the hardness or the impact resistance of the resulting coating films was insufficient.

**Claims**

1.   An aqueous resin composition comprising an alkyd resin (A) having vinyl polymer segments, a basic compound (B), and an aqueous medium (C), wherein
the alkyd resin (A) contains 20 to 45% by mass of an alicyclic polybasic acid-derived structure.

2.   The aqueous resin composition according to claim 1, wherein the alkyd resin (A) contains 15 to 50% by mass of acrylic polymer segments.

3.   The aqueous resin composition according to claim 1 or 2, wherein the alkyd resin (A) has an acid value of 20 to 50 mg KOH/g.

4.   An aqueous paint comprising the aqueous resin composition according to any one of claims 1 to 3.

5.   A coated article comprising a coating film of the aqueous paint according to claim 4.

**INTERNATIONAL SEARCH REPORT**

International application No.

PCT/JP2021/008350

A.  CLASSIFICATION OF SUBJECT MATTER
Int. Cl. C08G81/02(2006.01)i, C09D133/00(2006.01)i, C09D167/08(2006.01)i,
C09D7/63(2018.01)i
FI: C08G81/02, C09D133/00, C09D167/08, C09D7/63
According to International Patent Classification (IPC) or to both national classification and IPC

B.  FIELDS SEARCHED

Minimum documentation searched (classification system followed by classification symbols)
Int. Cl. C08G81/02, C09D133/00, C09D167/08, C09D7/63

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)
CAplus/REGISTRY (STN)

C.  DOCUMENTS CONSIDERED TO BE RELEVANT

| Category* | Citation of document, with indication, where appropriate, of the relevant passages | Relevant to claim No. |
|---|---|---|
| X | JP 06-298877 A (AKZO NOBEL N.V.) 25 October 1994, claims, examples 1-7, 10-11 | 1-5 |
| A | JP 48-000890 A (DAINIPPON INK AND CHEMICALS, INC.) 08 January 1973 | 1-5 |
| A | WO 2018/139329 A1 (DIC CORP.) 02 August 2018 | 1-5 |
| A | JP 2012-057013 A (KANSAI PAINT CO., LTD.) 22 March 2012 | 1-5 |
| A | JP 2003-524696 A (BAYER AG) 19 August 2003 | 1-5 |

☒  Further documents are listed in the continuation of Box C.  ☒  See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>23.04.2021 | Date of mailing of the international search report<br>11.05.2021 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2021/008350

C (Continuation). DOCUMENTS CONSIDERED TO BE RELEVANT

| Category* | Citation of document, with indication, where appropriate, of the relevant passages | Relevant to claim No. |
|---|---|---|
| A | JP 03-231926 A (DAINIPPON INK AND CHEMICALS, INC.) 15 October 1991 | 1-5 |
| A | JP 06-279710 A (DAI NIPPON TORYO CO., LTD.) 04 October 1994 | 1-5 |
| A | JP 09-040743 A (NOF CORP.) 10 February 1997 | 1-5 |
| A | JP 09-157538 A (DAICEL CHEMICAL INDUSTRIES, LTD.) 17 June 1997 | 1-5 |
| A | JP 3564825 B2 (DAINIPPON INK AND CHEMICALS, INC.) 15 September 2004 | 1-5 |

Form PCT/ISA/210 (continuation of second sheet) (January 2015)

INTERNATIONAL SEARCH REPORT

Information on patent family members

International application No.

PCT/JP2021/008350

| Patent Documents referred to in the Report | Publication Date | Patent Family | Publication Date |
|---|---|---|---|
| JP 06-298877 A | 25.10.1994 | US 5721294 A claims, examples 1-7, 10-11 EP 608020 A1 | |
| JP 48-000890 A | 08.01.1973 | (Family: none) | |
| WO 2018/139329 A1 | 02.08.2018 | US 2020/0002571 A1 EP 3575344 A1 CN 110225936 A | |
| JP 2012-057013 A | 22.03.2012 | (Family: none) | |
| JP 2003-524696 A | 19.08.2003 | WO 2001/062814 A2 EP 1265941 A1 US 2003/0109627 A1 KR 10-0648556 B1 | |
| JP 03-231926 A | 15.10.1991 | (Family: none) | |
| JP 06-279710 A | 04.10.1994 | EP 617096 A2 CN 1093097 A KR 10-1994-0021678 A | |
| JP 09-040743 A | 10.02.1997 | (Family: none) | |
| JP 09-157538 A | 17.06.1997 | (Family: none) | |
| JP 3564825 B2 | 15.09.2004 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3564825 B